# EUROPEAN PATENT APPLICATION

(11) **EP 3 441 641 A1**
(43) Date of publication of application: **13.02.2019**
(21) Application number: 17779163.9
(22) Date of filing: 05.04.2017
(51) Int. Cl.: F16F 9/508, F16F 9/32

(54) **SHOCK ABSORBER AND METHOD FOR PRODUCING SHOCK ABSORBER**

(30) Priority: 06.04.2016 JP 2016076257
(71) Applicant: KYB Corporation, Tokyo 105-6111 (JP)
(72) Inventor: INAMITSU, Kazutaka, Tokyo 105-6111 (JP); TARAOKA, Takashi, Tokyo 105-6111 (JP)
(74) Representative: MFG Patentanwälte Meyer-Wildhagen Meggle-Freund Gerhard PartG mbB
(86) International application number: PCT/JP2017/014193
(87) International publication number: WO 2017/175785

(57) **Abstract**

A shock absorber (A1) includes a housing(5) that includes an annular nut portion (5a) threaded to an outer circumference of a front end portion of a piston rod (3), an annular flange portion (5b) protruding outward from the nut portion (5a), and a tubular portion (5c) extending from an outer circumference of the flange portion (5b) in a direction away from the piston rod (3), a tube (6) that is inserted into the housing (5), and an elastic member (7) that is attached to an inner circumference of the tube (6) to define a first chamber (P1) communicating with an extension side chamber (L1) and a second chamber (P2) communicating with a compression side chamber (L2) inside the housing (5) and the tube (6) is fixed while being sandwiched between the flange portion (5b) and a bent portion (5d) corresponding to a support portion formed by caulking a front end of the tubular portion (5c) inward.

## Description

### Technical Field

The present invention relates to a shock absorber and a shock absorber manufacturing method.

### Background Art

Conventionally, a shock absorber is interposed between a vehicle body and an axle of a vehicle and is used to suppress a vibration of the vehicle body. For example, as disclosed in JP 4644572 (B2) and JP 4726049 (B2), the shock absorber includes a cylinder, a piston that is slidably inserted into the cylinder, a piston rod of which one end is connected to the piston and the other end extends to the outside of the cylinder, upper and lower chambers that are formed inside the cylinder and defined by the piston, first and second passages that communicate with the upper and lower chambers, a pressure chamber that is provided in the course of the second passage, a housing that has a pressure chamber formed therein and is attached to a front end of the piston rod, a free piston that is slidably inserted into the housing and defines the pressure chamber as one chamber communicating with the lower chamber and the other chamber communicating with the upper chamber, and a coil spring that exerts an urging force for suppressing a displacement of the free piston with respect to the pressure chamber.

In the shock absorber with such a configuration, the upper and lower chambers do not directly communicate with each other through the second passage. However, when the free piston moves, a volume ratio between one chamber and the other chamber in the pressure chamber changes and the liquid inside the pressure chamber flows into and out of the upper and lower chambers in response to the moving amount of the free piston. For this reason, the upper and lower chambers apparently communicate with each other through the second passage.

For this reason, the shock absorber can generate a high damping force with respect to the input of the low-frequency vibration and generate a low damping force with respect to the input of the high-frequency vibration. Thus, the shock absorber can generate a high damping force in a case in which the input vibration frequency is low due to the turning or the like of the vehicle and the shock absorber can reliably generate a low damping force in a case in which the input vibration frequency is high due to the passage of the vehicle on the unevenness of the road. As a result, it is possible to improve the ride comfort of the vehicle.

Further, in the shock absorber, the first passage is opened or closed by the stacked leaf valve corresponding to the damping force generation component. Then, when the piston rod is inserted through the centers of the piston and the stacked leaf valve and the housing is threaded to the screw portion provided at the front end of the piston rod, the piston and the valves can be fixed to the outer circumference of the piston rod. That is, in the shock absorber, the housing is used as the piston nut.

### Summary of the Invention

Here, in a case in which a general piston nut is used, the front end of the piston rod is formed in a tubular shape to protrude from the piston nut and the front end is caulked outward in order to prevent the looseness of the piston nut. However, when the housing is used as the piston nut as described above, it is difficult to prevent the looseness by caulking the front end of the piston rod outward. This is because the front end of the piston rod cannot be caulked since the front end of the piston rod is surrounded by the housing and the free piston although good workability is obtained when the housing is threaded to the outer circumference of the piston rod while the coil spring and the free piston are accommodated in the housing in advance.

Here, an object of the invention is to provide a shock absorber capable of easily preventing a housing threaded to a shaft member such as a piston rod from being loosened.

In order to solve the above-described problems, the invention includes a partition wall that is attached to an outer circumference of a shaft to define two operation chambers, a housing that is threaded to an outer circumference of a front end portion of the shaft, a tube that is inserted into the housing, an elastic member that is attached to an inner circumference of the tube to define a first chamber communicating with one operation chamber and a second chamber communicating with the other operation chamber inside the housing, and a support portion that is formed by plastically deforming a front end portion of the tubular portion or is attached to the front end portion of the tubular portion and the tube is fixed while being sandwiched between the support portion and the flange portion. According to the configuration, after the nut portion of the housing is threaded to the outer circumference of the shaft and the front end of the shaft protruding from the nut portion is caulked outward, the tube to which the elastic member is attached is inserted into the housing and the support portion is formed by plastic deformation or the support portion is attached to the tubular portion to fix the tube.

### Brief Description of Drawings

Fig. 1 is a front view illustrating a shock absorber according to a first embodiment of the invention in a partially notched state.
Fig. 2 is an enlarged longitudinal sectional view illustrating a part of Fig. 1.
Fig. 3 is a longitudinal sectional view illustrating a part of a shock absorber according to a second embodiment of the invention in a state in which a modified part is enlarged.
Fig. 4 is an enlarged longitudinal sectional view illustrating a part of a shock absorber according to a third embodiment of the invention.

### Description of Embodiments

Hereinafter, embodiments of the invention will be described with reference to the drawings. The same reference numerals given in several drawings indicate the same or corresponding components.

### <First Embodiment>

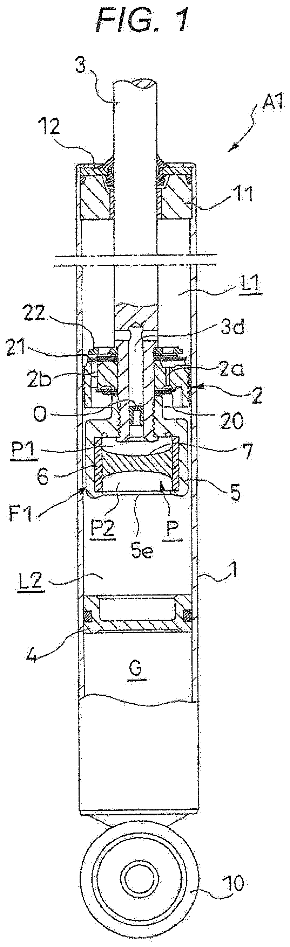

A shock absorber A1 according to a first embodiment of the invention illustrated in Fig. 1 exerts a damping force while being interposed between a vehicle body and an axle of a vehicle and suppresses a vibration of the vehicle body. The shock absorber A1 includes a cylinder 1, a piston 2 that is a partition wall slidably inserted into the cylinder 1, a piston rod 3 that is a shaft formed such that one end is connected to the piston 2 and the other end extends to the outside of the cylinder 1, a frequency sensitive portion F1 that is attached to a lower side of the piston 2 of the piston rod 3 in Fig. 1, and a sliding partition wall 4 that is slidably inserted into the cylinder 1 on the opposite piston rod side.

Then, the cylinder 1 is connected to one of the vehicle body and the axle through the attachment member 10 and the piston rod 3 is connected to the other of the vehicle body and the axle through an attachment member (not illustrated). Thus, when the vehicle body and the axle move away from each other, the piston rod 3 retracts from the cylinder 1 so that the shock absorber A1 is extended. In contrast, when the vehicle body and the axle move close to each other, the piston rod 3 enters the cylinder 1 so that the shock absorber A1 is compressed.

An extension side chamber L1 and the compression side chamber L2 that are defined by the piston 2 are formed inside the cylinder 1 and a gas chamber G that is defined from the compression side chamber L2 by the sliding partition wall 4 is formed therein. The extension side chamber L1 and the compression side chamber L2 are operation chambers and are filled with a liquid such as hydraulic oil. Further, a gas is enclosed in the gas chamber G. The cylinder 1 is formed as a bottomed cylinder and an opening end portion of the cylinder 1 is provided with a rod guide 11 that movably and axially supports the piston rod 3 in the axial direction. Then, a gap between the cylinder 1 and the piston rod 3 is blocked by the seal member 12 stacked on the rod guide 11. Thus, the liquid and the gas inside the cylinder 1 do not leak to the outside of the cylinder 1 and the inside of the cylinder 1 is defined from external air.

Further, in the shock absorber A1, the piston rod 3 is formed as a single rod type to be inserted only into the extension side chamber L1 and compensates a change in cylinder internal volume corresponding to a piston rod protrusion volume by the gas chamber G. Specifically, the cylinder internal volume corresponding to the piston rod retraction volume increases during the extension operation of the shock absorber A1 in which the piston rod 3 retracts from the cylinder 1. However, since the sliding partition wall 4 moves upward in Fig. 1 to extend the gas chamber G, the amount of increased cylinder internal volume is compensated. In contrast, the cylinder internal volume corresponding to the piston rod entering volume decreases during the compression operation of the shock absorber A1 in which the piston rod 3 enters the cylinder 1. However, since the sliding partition wall 4 moves downward in Fig. 1 to compress the gas chamber G, the amount of decreased cylinder internal volume is compensated.

Next, the piston 2 is provided with an extension side damping passage 2a and a compression side damping passage 2b that are damping passages communicating the extension side chamber L1 and the compression side chamber L2 with each other. The outlets of the extension side damping passage 2a and the compression side damping passage 2b are provided with leaf valves 20 and 21 corresponding to damping force generation components. Then, the leaf valve 20 gives a resistance to the flow of the liquid passing through the extension side damping passage 2a and the leaf valve 21 gives a resistance to the flow of the liquid passing through the compression side damping passage 2b. Specifically, the leaf valve 20 is laminated on the lower side of the piston 2 in Fig. 1, opens and closes the outlet end of the extension side damping passage 2a, and sets the extension side damping passage 2a as a one-way passage that allows only the flow of the liquid from the extension side chamber L1 to the compression side chamber L2. The other leaf valve 21 is stacked on the upper side of the piston 2 in Fig. 1, the outlet end of the compression side damping passage 2b is opened or closed, and the compression side damping passage 2b is set as a one-way passage that allows only the flow of the liquid from the compression side chamber L2 to the extension side chamber L1.

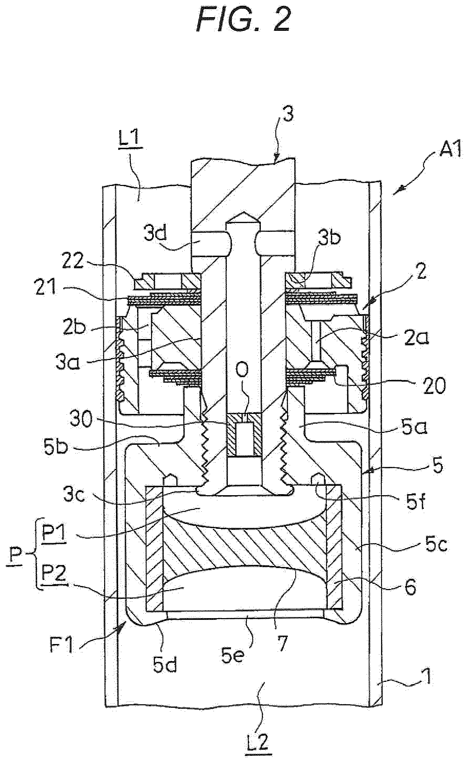

Further, an annular valve stopper 22 is laminated on the upper side of the leaf valve 21 in Fig. 1. All of the piston 2, the leaf valves 20 and 21, and the valve stopper 22 include center holes penetrating the center portions. Then, the leaf valve 21 and the valve stopper 22 are stacked in this order on one side of the piston 2, the leaf valve 20 is stacked on the other side of the piston 2, a small diameter portion 3a (Fig. 2) of the piston rod 3 is inserted from the valve stopper 22 into the center holes, and the housing 5 to be described later of the frequency sensitive portion F1 is threaded to the front end portion of the small diameter portion 3a. Then, the inner circumference portions of the piston 2, the leaf valves 20 and 21, and the valve stopper 22 are fixed while being sandwiched between a step portion 3b of the piston rod 3 (Fig. 2) and the housing 5. In this way, the housing 5 also serves as the piston nut that attaches the piston 2 and the valves stacked on the piston 2 to the piston rod 3 corresponding to the shaft.

As illustrated in Fig. 2, the frequency sensitive portion F1 includes the housing 5, a tube 6 that is accommodated in the housing 5, and an elastic member 7 that is attached to the inner circumference of the tube 6. The housing 5 includes an annular nut portion 5a that is threaded to the outer circumference of the piston rod 3, a flange portion 5b that protrudes outward from the nut portion 5a, and a tubular portion 5c that protrudes downward in Fig. 2 from the outer circumference of the flange portion 5b. Further, the tube 6 is inserted into the tubular portion 5c so that the outer circumference is held by the tubular portion 5c. The tube 6 is formed of metal and the elastic member 7 is attached to the inner circumference thereof by baking. The elastic member 7 is an elastomer such as rubber and fills the center portion of the tube 6 in the axial direction without a gap.

Then, after the housing 5 is threaded to the piston rod 3 and the front end of the piston rod 3 is caulked outward to form the bent portion 3c, the tube 6 to which the elastic member 7 is attached is inserted into the housing 5 and the front end corresponding to the lower end of Fig. 2 in the tubular portion 5c is caulked inward to form a bent portion 5d. Then, the looseness of the housing 5 is prevented by the bent portion 3c of the piston rod 3 and the tube 6 is fixed while being sandwiched between the bent portion 5d and the flange portion 5b of the housing 5.

A pressure chamber P is formed inside the tube 6 inside the housing 5. The pressure chamber P is defined as a first chamber P1 on the upper side in Fig. 2 and a second chamber P2 on the lower side in Fig. 2 by the elastic member 7. The first chamber P1 communicates with the extension side chamber L1 by the passage hole 3d formed from the front end of the piston rod 3 to the side portion thereof and the second chamber P2 communicates with the compression side chamber L2 through the opening 5e corresponding to the inner circumference of the bent portion 5d of the housing 5. The top tubular throttle member 30 is fitted to the inner circumference of the front end side of the piston rod 3 and the orifice 0 is formed by squeezing a part of the passage hole 3d by the throttle member 30.

Further, when the tube 6 is fixed by caulking the front end of the tubular portion 5c as described above, one end of the tube 6 is pressed against the flange portion 5b and the other end thereof is pressed against the bent portion 5d. Thus, it is possible to prevent the liquid inside the tube 6 from flowing to the outer circumference side and to prevent the first chamber P1 and the second chamber P2 from communicating with each other through a gap between the outer circumference of the tube 6 and the housing 5.

Further, a tool insertion hole 5f is formed on the lower side of the flange portion 5b in Fig. 2 and can be used to thread the housing 5 to the piston rod 3.

Hereinafter, an operation of the shock absorber A1 according to the embodiment will be described. During the extension operation of the shock absorber A1, the piston 2 moves upward in Fig. 1 with respect to the cylinder 1 so that the extension side chamber L1 is compressed and the compression side chamber L2 is extended. Then, since the pressure of the extension side chamber L1 increases and the pressure of the compression side chamber L2 decreases, a difference pressure is generated therebetween. Accordingly, the liquid of the extension side chamber L1 passes through the extension side damping passage 2a and moves to the compression side chamber L2. Further, when the pressure of the extension side chamber L1 increases, the pressure is transmitted to the first chamber P1 through the passage hole 3d and the orifice 0 so that the elastic member 7 is bent toward the second chamber P2. Then, since the volume of the second chamber P2 decreases as the volume of the first chamber P1 increases, the liquid of the second chamber P2 is extruded to the compression side chamber L2 through the opening 5e.

In contrast, the piston 2 moves downward in Fig. 1 with respect to the cylinder 1 so that the compression side chamber L2 is compressed and the extension side chamber L1 is extended during the compression operation of the shock absorber A1. Then, since the pressure of the compression side chamber L2 increases and the pressure of the extension side chamber L1 decreases, a differential pressure is generated therebetween. Accordingly, the liquid of the compression side chamber L2 passes through the compression side damping passage 2b and moves to the extension side chamber L1. Further, when the pressure of the compression side chamber L2 increases, the pressure is transmitted to the second chamber P2 through the opening 5e so that the elastic member 7 is bent toward the first chamber P1. Then, the volume of the second chamber P2 increases and the volume of the first chamber P1 decreases by the increased amount. Accordingly, the liquid of the first chamber P1 is extruded to the extension side chamber L1 through the passage hole 3d and the orifice 0.

In this way, since the liquid is extruded from the other of the first chamber P1 and the second chamber P2 as much as the liquid flowing into one of the first chamber P1 and the second chamber P2 by the elastic deformation of the elastic member 7 during the extension and compression operations of the shock absorber A1, the liquid apparently moves between the extension side chamber L1 and the compression side chamber L2 through the pressure chamber P in addition to the extension side damping passage 2a and the compression side damping passage 2b.

Here, when the piston speed is the same during the extension and compression operations of the shock absorber A1 even when the frequency of the vibration input to the shock absorber A1, that is, the frequency of the vibration during the extension and compression operations of the shock absorber A1 is a low frequency or a high frequency, the amplitude of the shock absorber A1 at the time of inputting the low-frequency vibration becomes larger than the amplitude of the shock absorber A1 at the time of inputting the high-frequency vibration. In this way, when the frequency of the vibration input to the shock absorber A1 is low, the amplitude is large. For this reason, the amount of the liquid moving between the extension side chamber L1 and the compression side chamber L2 for one cycle of the vibration increases and hence the amount of deformed elastic member 7 increases. Then, a differential pressure is generated between the first chamber P1 and the second chamber P2 as the elastic force of the elastic member 7 resisting the deformation increases. Accordingly, a differential pressure between the extension side chamber L1 and the first chamber P1 and a differential pressure between the compression side chamber L2 and the second chamber P2 decrease and a flow rate of the liquid moving through the pressure chamber P apparently decreases. Since the flow rate of the liquid moving in the extension side damping passage 2a and the compression side damping passage 2b increases as the apparent flow rate decreases, the damping force generated by the shock absorber A1 is kept high.

Further, since the amplitude is smaller than that of the low-frequency vibration input state when the high-frequency vibration is input to the shock absorber A1, the amount of the liquid moving between the extension side chamber L1 and the compression side chamber L2 for one cycle of the vibration decreases and hence the amount of deformed elastic member 7 also decreases. Then, the differential pressure between the first chamber P1 and the second chamber P2 decreases as the elastic force of the elastic member 7 resisting the deformation decreases. Accordingly, the first chamber P1 and the second chamber P2 have substantially the same pressure, the differential pressure between the extension side chamber L1 and the first chamber P1 and the differential pressure between the compression side chamber L2 and the second chamber P2 increase as compared with the low-frequency vibration input state, and the above-described apparent flow rate increases as compared with the low-frequency vibration input state. Since the flow rate of the liquid moving in the extension side damping passage 2a and the compression side damping passage 2b decreases as the apparent flow rate increases, the damping force generated by the shock absorber A1 decreases as compared with the low-frequency vibration input state.

Hereinafter, operational effects of the shock absorber A1 according to the embodiment will be described. In the embodiment, the shock absorber A1 is manufactured by threading the nut portion 5a of the housing 5 to the outer circumference of the piston rod (shaft) 3, caulking the front end of the piston rod 3 protruding from the nut portion 5a outward, inserting the tube 6 to which the elastic member 7 is attached into the housing 5, and caulking the front end of the tubular portion 5c inward to fix the tube 6. Thus, the looseness of the housing 5 is prevented by the bent portion 3c formed by caulking the front end of the piston rod 3. Further, since the front end of the tubular portion 5c is caulked so that the tube 6 is fixed to the housing 5 and the force is applied to the tube 6 from both sides in the axial direction, the tube 6 can be easily and reliably fixed. In addition, the upper end of the tube 6 in Fig. 2 is pressed against the flange portion 5b and the lower end of the tube 6 in Fig. 2 is pressed against the bent portion 5d. Thus, both ends of the tube 6 in the axial direction are brought into close contact with the flange portion 5b and the bent portion 5d to easily block a gap therebetween.

Further, in the embodiment, the orifice 0 is provided in the course of the passage hole 3d communicating the extension side chamber L1 with the first chamber P1. Then, the orifice 0 is formed in the throttle member 30 that is fitted to the inner circumference of the piston rod 3 and is provided in the course of the passage hole 3d. Thus, processing for forming the orifice 0 is easy. Further, when a resistance obtained by the orifice 0 needs to be changed, the resistance may be changed by another throttle member 30 with an orifice 0 having a different opening area and hence the tuning is easily performed. Additionally, the orifice 0 may be provided in any one of the passage that communicates the extension side chamber L1 with the first chamber P1 and the passage that communicates the compression side chamber L2 with the second chamber P2 and the method of forming the orifice 0 and the position thereof can be appropriately changed.

Further, in the embodiment the elastic member 7 is integrated with the tube 6 by baking. Thus, since the elastic member 7 can strongly adhere to the tube 6, it is possible to easily and reliably prevent the elastic member 7 from being displaced inside the tube 6 or from being separated from the tube 6. In addition, it is possible to prevent a gap from being formed between the elastic member 7 and the tube 6. Additionally, the method of attaching the elastic member 7 is not limited to the baking and can be appropriately changed. For example, the elastic member 7 may be formed in an annular sheet shape and the outer circumference portion thereof may be pressed against the inner circumference of the tube 6 by a ring or the like. Then, such modifications can be made regardless of the forming method and the position of the orifice 0.

Further, in the embodiment, the shock absorber A1 includes the piston rod (shaft) 3, the piston (the partition wall) 2 that is attached to the outer circumference of the piston rod 3 to define the extension side chamber (one operation chamber) L1 and the compression side chamber (the other operation chamber) L2, the housing 5 that includes the annular nut portion 5a threaded to the outer circumference of the front end portion of the piston rod 3, the annular flange portion 5b protruding outward from the nut portion 5a, and the tubular portion 5c extending from the outer circumference of the flange portion 5b upward in Fig. 2 (in a direction moving away from the piston rod 3), the tube 6 that is inserted into the housing 5, the elastic member 7 that is attached to the inner circumference of the tube 6 to define the first chamber P1 communicating with the extension side chamber (one operation chamber) L1 and the second chamber P2 communicating with the compression side chamber (the other operation chamber) L2 inside the housing 5, and the bent portion (the support portion) 5d that is formed by plastically deforming the lower end portion (the front end portion) of the tubular portion 5c in Fig. 2. Then, the tube 6 is fixed while being sandwiched between the bent portion 5d and the flange portion 5b.

According to the above-described configuration, after the nut portion 5a of the housing 5 is threaded to the outer circumference of the piston rod 3 and the front end of the piston rod 3 protruding downward in Fig. 2 from the nut portion 5a is caulked outward, the tube 6 to which the elastic member 7 is attached is inserted into the housing 5 and the front end of the tubular portion 5c is caulked inward (plastically deformed) to fix the tube 6. Further, since the front end of the tubular portion 5c is caulked by using the lower end of the tube 6 in Fig. 2 as a support point, the workability is improved. Thus, according to the shock absorber A1, it is possible to easily prevent the looseness of the housing 5 threaded to the piston rod 3.

Further, according to the above-described configuration, since the elastic member 7 is elastically deformed during the extension and compression operations of the shock absorber A1 so that a volume ratio between the first chamber P1 and the second chamber P2 changes and the liquid inside the pressure chamber P flows into and out of the first chamber P1 and the second chamber P2 in response to the amount of elastic deformation, the liquid apparently moves between the extension side chamber L1 and the compression side chamber L2 through the pressure chamber P. Since the apparent flow rate changes in response to the amount of elastic deformation and the flow rate of the extension side damping passage 2a and the compression side damping passage 2b changes in response to the change in flow rate, it is possible to obtain an effect of decreasing the damping force at the time of inputting the high-frequency vibration in response to the frequency of the input vibration. Thus, since the shock absorber A1 exerts a high damping force in a case in which the input vibration frequency is low due to the turning or the like of the vehicle and exerts a low damping force in a case in which the input vibration frequency is high due to the passage of the vehicle on the unevenness of the road, it is possible to improve the ride comfort of the vehicle. Further, the spring constant of the elastic member 7 can be adjusted by changing a material or a thickness.

Here, in the conventional shock absorber that exerts the damping force in response to the frequency, the pressure chamber is defined by the free piston sliding on the inner circumference of the housing and the free piston is urged by the coil spring. In contrast, in the shock absorber A1, the pressure chamber P is defined by the elastic member 7 and the elastic member 7 serves as the partition wall of the free piston and also serves as a spring component that gives an urging force to the partition wall of the coil spring to return to a neutral position. Thus, in the shock absorber A1, it is possible to shorten the axial length of the housing 5 as compared with a case in which both the free piston and the coil spring are necessary. Thus, since it is possible to suppress an increase in the axial length of the shock absorber A1 even when the housing 5 is provided to the piston rod 3, it is possible to obtain satisfactory mountability of the shock absorber A1.

In addition, in the shock absorber A1, since the partition wall defining the pressure chamber P is set as the elastic member 7 so as not to slide, high processing accuracy is not required as compared with the shock absorber for sliding the free piston and components can be provided at low cost. Thus, according to the shock absorber A1, it is possible to exert a damping force in response to a frequency and to decrease cost.

Additionally, the shock absorber A1 is of a single rod type in which the piston rod 3 extends only to one side of the piston 2, but may be of a double rod type in which the piston rod 3 extends to both sides of the piston 2.

Further, the shock absorber A1 is of a single tube type and compensates a change in cylinder internal volume corresponding to the piston rod protrusion volume of the piston rod entering and exiting the cylinder 1 by the gas chamber G. However, the shock absorber A1 may be of a double tube type in which an outer shell is provided on the outer circumference of the cylinder 1. In this way, when the shock absorber A2 is of a dual tube type, a reservoir storing a liquid may be formed between the outer shell and the cylinder 1, a base valve may be provided in the course of the passage communicating the reservoir with the compression side chamber L2, and a change in cylinder internal volume may be compensated by the reservoir. In this case, the base valve portion may be provided with the frequency sensitive portion F1.

Then, the above-described modifications can be made regardless of the position of the orifice 0 and the method of attaching the elastic member 7.

### <Second Embodiment>

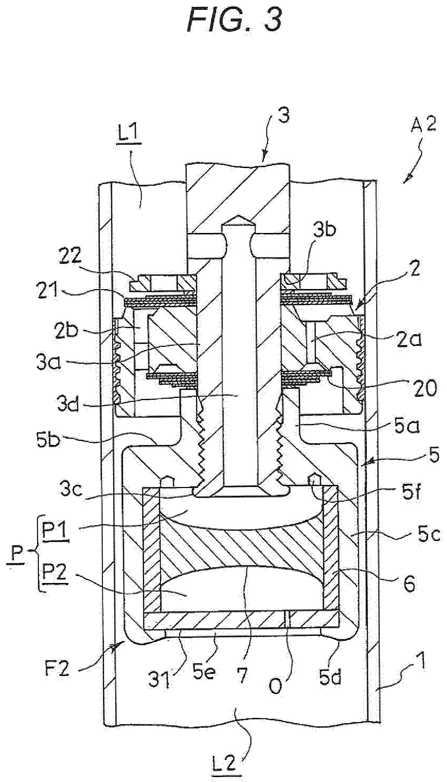

Similarly to the shock absorber A1 according to the first embodiment, a shock absorber A2 according to a second embodiment of the invention illustrated in Fig. 3 suppress the vibration of the vehicle body by exerting the damping force while being interposed between the vehicle body and the axle of the vehicle. In the shock absorber A2 of the embodiment, a position provided with the orifice 0 is different from that of the shock absorber A1 of the first embodiment, but the other structures and operations are the same as those of the shock absorber A1. Thus, only a configuration different from that of the shock absorber A1 will be described in detail below. Then, the same reference numerals will be given to the common components and the description thereof will be omitted.

The shock absorber A2 according to the embodiment includes a plate 31 that is fixed while being sandwiched between the bent portion 5d and the tube 6 and the second chamber P2 and the compression side chamber (the other operation chamber) L2 communicate with each other through the orifice 0 provided in the plate 31. For this reason, the plate 31 is easily attached and the processing for forming the orifice 0 is easily performed. Further, when a resistance obtained by the orifice 0 needs to be changed, the resistance may be changed by another plate 31 with an orifice 0 having a different opening area and hence tuning is easily performed.

Further, the shock absorber A2 is manufactured by threading the nut portion 5a of the housing 5 to the outer circumference of the piston rod (shaft) 3, caulking the front end of the piston rod 3 protruding from the nut portion 5a outward, sequentially inserting the tube 6 to which the elastic member 7 is attached and the plate 31 into the housing 5, and caulking the front end of the tubular portion 5c inward to fix the tube 6. Thus, the looseness of the housing 5 is prevented by the bent portion 3c formed by caulking the front end of the piston rod 3. Further, since the front end of the tubular portion 5c is caulked to fix the tube 6 and the plate 31 to the housing 5, the upper end of the tube 6 in Fig. 3 is pressed against the flange portion 5b, the lower end of the tube 6 in Fig. 3 is pressed against the plate 31, and the plate 31 is pressed against the bent portion 5d. Thus, both ends of the tube 6 in the axial direction are brought into close contact with the flange portion 5b and the plate 31 and the plate 31 is brought into close contact with the bent portion 5d to easily block a gap therebetween.

Additionally, similarly to the shock absorber A1 of the first embodiment, the shock absorber A2 can be also formed in a dual rod type or a dual tube shape. Further, a frequency sensitive portion F2 of the shock absorber A2 may be provided in a base valve portion.

### <Third Embodiment>

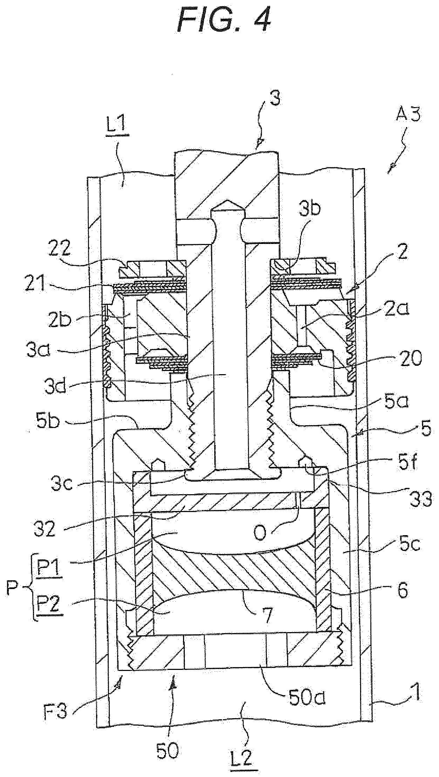

Similarly to the shock absorber A1 according to the first embodiment, a shock absorber A3 according to a third embodiment of the invention shown in Fig. 4 suppresses the vibration of the vehicle body by exerting the damping force while being interposed between the vehicle body and the axle of the vehicle. In the shock absorber A3 of the embodiment, a position provided with the orifice 0 and the support portion sandwiching the tube 6 in cooperation with the flange portion 5b is different from that of the shock absorber A1 of the first embodiment, but the other structures and operations are the same as those of the shock absorber A1. Thus, only a configuration different from that of the shock absorber A1 will be described in detail below. Then, the same reference numerals will be given to the common components and the description thereof will be omitted.

The shock absorber A3 according to the embodiment includes a support portion 50 that is threaded to the inner circumference of the lower end portion (the front end portion) of the tubular portion 5c of the housing 5 in Fig. 4 and a plate 32 that is fixed while being sandwiched between the support portion 50 and the tube 6 and the first chamber P1 and the extension side chamber (one operation chamber) L1 communicate with each other through the orifice 0 provided in the plate 32. For this reason, the plate 32 is easily attached and the processing for forming the orifice 0 is easily performed. Further, when a resistance obtained by the orifice 0 needs to be changed, the resistance may be changed by another plate 32 with an orifice 0 having a different opening area and hence tuning is easily performed. Further, since the support portion 50 is formed in a threading type and is easily attached or detached, the plate 32 that has fixed can be easily replaced later.

Further, the outer circumference of the plate 32 is provided with an annular leg portion 33 erected toward the flange portion 5b and a gap is formed between the plate 32 and the front end of the piston rod 3. Thus, the orifice 0 and the passage hole 3d communicate with each other through the gap at all times even when the position of the orifice 0 is not aligned to the position of the passage hole 3d.

Further, since the support portion 50 is formed in an annular shape and includes a through-hole 50a penetrating the center thereof, the second chamber P2 communicates with the compression side chamber L2 through the through-hole 50a. Furthermore, since the through-hole 50a has a hexagonal prism shape, the through-hole 50a can be used as a tool insertion hole and can be used for the threading the support portion 50 to the housing 5.

Further, the shock absorber A3 is manufactured by threading the nut portion 5a of the housing 5 to the outer circumference of the piston rod (shaft) 3, caulking the front end of the piston rod 3 protruding from the nut portion 5a outward, sequentially inserting the plate 32 and the tube 6 to which the elastic member 7 is attached into the housing 5, and threading the support portion 50 to the inner circumference of the front end portion of the tubular portion 5c to fix the tube 6. Thus, the looseness of the housing 5 is prevented by the bent portion 3c formed by caulking the front end of the piston rod 3. Further, since the support portion 50 is threaded to the front end portion of the tubular portion 5c so that the tube 6 and the plate 32 are fixed to the housing 5 and a force is applied to the tube 6 from both sides in the axial direction, the tube 6 can be easily and reliably fixed. In addition, the upper end of the tube 6 in Fig. 4 is pressed against the plate 32, the lower end of the tube 6 in Fig. 4 is pressed against the support portion 50, and the plate 32 is pressed against the flange portion 5b through the leg portion 33. Thus, both ends of the tube 6 in the axial direction are brought into close contact with the plate 32 and the support portion 50 and the leg portion 33 provided in the plate 32 is brought into close contact with the flange portion 5b so that a gap therebetween is easily blocked.

Additionally, the shock absorber A3 can be also formed in a dual rod type or a dual tube type similarly to the shock absorber A1 of the first embodiment. Further, the frequency sensitive portion F3 of the shock absorber A3 may be provided in a base valve portion. Further, the support portion 50 is threaded to the inner circumference of the front end portion of the tubular portion 50c of the housing 5, but the support portion 50 may be formed in a bottomed tubular shape to be threaded to the outer circumference of the tubular portion 50c. Further, a plate provided with the orifice 0 may be threaded to the tubular portion 50c of the housing 5 to serve as a support portion.

While the preferred embodiments of the invention have been described in detail, improvements, modifications, and changes can be made without departing from the scope of the claims.

This application claims priority based on Japanese Patent Application No. 2016-076257 filed on April 6, 2016 in Japan Patent Office, the entire contents of which are incorporated herein by reference.

## Claims

1. A shock absorber comprising:
a shaft;
a partition wall that is attached to an outer circumference of the shaft to define two operation chambers;
a housing that includes an annular nut portion threaded to an outer circumference of a front end portion of the shaft, an annular flange portion protruding outward from the nut portion, and a tubular portion extending from an outer circumference of the flange portion in a direction away from the shaft;
a tube that is inserted into the housing;
an elastic member that is attached to an inner circumference of the tube to define a first chamber communicating with one operation chamber and a second chamber communicating with the other operation chamber inside the housing; and
a support portion that is formed by plastically deforming a front end portion of the tubular portion or is attached to a front end portion of the tubular portion,
wherein the tube is fixed while being sandwiched between the support portion and the flange portion.

2. The shock absorber according to claim 1,
wherein the support portion is a bent portion that is formed by caulking the front end portion of the tubular portion inward.

3. The shock absorber according to claim 1,
wherein the support portion is threaded to the front end portion of the tubular portion.

4. The shock absorber according to claim 1,
wherein the elastic member is integrated with the tube by baking.

5. The shock absorber according to claim 1, further comprising:
a plate that is fixed while being sandwiched between the flange portion and the tube or between the tube and the support portion; and
an orifice that is provided in the plate,
wherein the first chamber and one operation chamber or the second chamber and the other operation chamber communicate with each other through the orifice.

6. A method of manufacturing the shock absorber according to claim 1,
wherein before the support portion is formed in the tubular portion by plastic deformation or the support portion is attached to the tubular portion,
the nut portion is threaded to an outer circumference of the shaft, a front end of the shaft protruding from the nut portion is caulked outward, and the tube to which the elastic member is attached is inserted into the housing, and
the support portion is formed by plastic deformation or the support portion is attached to the tubular portion and the tube is fixed while being sandwiched between the support portion and the flange portion.
